# EUROPEAN PATENT APPLICATION

(11) **EP 2 544 092 A1**
(43) Date of publication of application: **09.01.2013**
(21) Application number: 10846955.2
(22) Date of filing: 10.12.2010
(51) Int. Cl.: G06F 12/00, G06F 3/06

(54) **STORAGE DEVICE**

(30) Priority: 04.03.2010 JP 2010047411
(71) Applicant: NEC Corporation, Tokyo 108-8001 (JP); NEC Software Tohoku, Ltd., Sendai-shi, Miyagi 980-0811 (JP)
(72) Inventor: YAMAMOTO, Hiroaki, Tokyo 108-8001 (JP); SATO, Takatoshi, Sendai-shi Miyagi 980-0811 (JP); TSUDA, Masanori, Sendai-shi Miyagi 980-0811 (JP)
(74) Representative: Vossius & Partner
(86) International application number: PCT/JP2010/007183
(87) International publication number: WO 2011/108048

(57) **Abstract**

A storage device 110 includes: a data writing part 111 configured to store data to be written into a storage device 120 and also, when storing other data of the same content as the data already stored in the storage device into the storage device, refer to the data already stored in the storage device as the other data; and a data separating part 112 configured to separate data to be written into a user data portion and a management data portion that are classified in accordance with a previously set criterion. The data writing part 111 is configured to store the user data portion into a user data file 121, store the management data portion into a management data file 122, and store the user data portion and the management data portion separated by the data separating part 112 into the storage device 120.

## Description

### TECHNICAL FIELD

The present invention relates to a storage device, more specifically, a storage device that eliminates duplicated storage of data of the same content.

### BACKGROUND ART

In recent years, various kinds of information are digitalized with development and spread of computers. As a device for storing such digital data, there is a storage device such as a magnetic tape and a magnetic disk. Because the amount of data that should be stored increases day by day and reaches a huge amount, a mass storage system is required. Moreover, as well as reduction of the cost spent for a storage device, reliability is also required. In addition, it is also required that data can be easily retrieved later. As a result, a storage system that can automatically realize increase of storage capacity and performance, eliminates duplicated storage to reduce a storage cost and has high redundancy is desired.

Under such a circumstance, in recent years, as shown in Patent Document 1, a content-addressable storage system has been developed. This content-addressable storage system distributes and stores data into a plurality of storage devices and, by a unique content address specified depending on the content of the data, specifies a storage position where the data is stored. To be specific, a content-addressable storage system divides predetermined data into a plurality of fragments and adds a fragment as redundant data, and then stores these fragments into a plurality of storage devices, respectively.

Later, it is possible to designate a content address to retrieve data, namely, fragments stored in a storage position specified by the content address and restore the predetermined data before being divided from the fragments.

Further, for example, a hash value of data, which is generated so as to be unique depending on the content of data, is used as the content address. Therefore, in the case of duplicated data, it is possible to refer to data in the same storage location and acquire data of the same content. Consequently, it is unnecessary to store the duplicated data separately, and it is possible to eliminate duplicated recording and reduce the data capacity.

[Patent Document 1] Japanese Unexamined Patent Application Publication No. 2005-235171

In general, data deduplication described above is judged by separating data of a file into certain-length data (fixed-length or variable-length) and comparing the data. Therefore, in a case that a difference of data in one file exists in smaller intervals than the separation length of the file, the data are not judged as data of the same content. That is to say, when the separated data contain data portions of the same content but include slightly different portions, both the separated data are stored, it is impossible to execute data deduplication for efficient storage.

For example, data backup software inserts unique management information into a backup file together with backup data. The inserted unique management information varies depending on a backup and, in a case that an interval of insertion of the management information is shorter than an interval of separation of data at the time of data duplication judgment, it is impossible to execute deduplication of data to be stored as described above. As a result, a problem of decrease of the efficiency of storage of data arises.

### SUMMARY

Accordingly, an object of the present invention is to solve the aforementioned problem, "decrease of the efficiency of storage of data."

In order to achieve the object, a storage device according to an exemplary embodiment of the present invention includes:
a data writing part configured to store data to be written into a storage device and also, when storing other data of a same content as the data already stored in the storage device into the storage device, refer to the data already stored in the storage device as the other data; and
a data separating part configured to separate data to be written into a user data portion and a management data portion that are classified in accordance with a previously set criterion.
Then, the data writing part is configured to store the user data portion into a user data file, store the management data portion into a management data file, and store the user data portion and the management data portion separated by the data separating part into the storage device.

Further, a program according to another exemplary embodiment of the present invention is a program including instructions for causing an information processing device to realize:
a data writing part configured to store data to be written into a storage device and also, when storing other data of a same content as the data already stored in the storage device into the storage device, refer to the data already stored in the storage device as the other data; and
a data separating part configured to separate data to be written into a user data portion and a management data portion that are classified in accordance with a previously set criterion.
Then, the data writing part is configured to store the user data portion into a user data file, store the management data portion into a management data file, and store the user data portion and the management data portion separated by the data separating part into the storage device.

Further, a data storing method according to another exemplary embodiment of the present invention includes, in an information processing device that has a function of storing data to be written into a storage device and also, when storing other data of a same content as the data already stored in the storage device into the storage device, referring to the data already stored in the storage device as the other data:
separating data to be written into a user data portion and a management data portion that are classified in accordance with a previously set criterion; and
storing the user data portion into a user data file, storing the management data portion into a management data file, and storing the user data portion and the management data portion separated by the data separating part into the storage device.

With the configurations described above, the present invention can realize increase of the efficiency of storage of data.

### BRIEF DESCRIPTION OF DRAWINGS

Fig. I is a block diagram showing a configuration of a whole system including a storage system according to a first exemplary embodiment of the present invention:
Fig. 2 is a block diagram showing an outline of a configuration of the storage system according to the first exemplary embodiment of the present invention:
Fig. 3 is a function block diagram showing the configuration of the storage system according to the first exemplary embodiment of the present invention:
Fig. 4 is an explanation view for explaining an aspect of a data write process in the storage system disclosed in Fig. 3;
Fig. 5 is an explanation view for explaining an aspect of the data write process in the storage system disclosed in Fig. 3;
Fig. 6 is an explanation view for explaining an aspect of the data write process in the storage system disclosed in Fig. 3;
Fig. 7 is a view showing an example of a data structure of index data disclosed in Fig. 6:
Fig. 8 is a flowchart showing an operation of the data write process in the storage system disclosed in Fig. 3;
Fig. 9 is a flowchart showing an operation of a data read process in the storage system disclosed in Fig. 3; and
Fig. 10 is a function block diagram showing a configuration of a storage system according to Supplementary Note 1.

### EXEMPLARY EMBODIMENTS

### <First Exemplary Emhodiment>

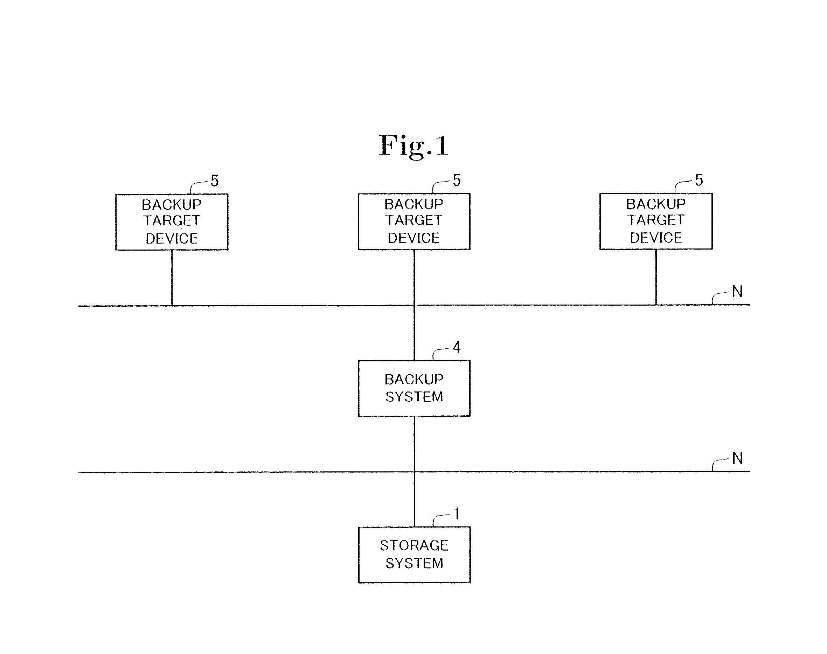

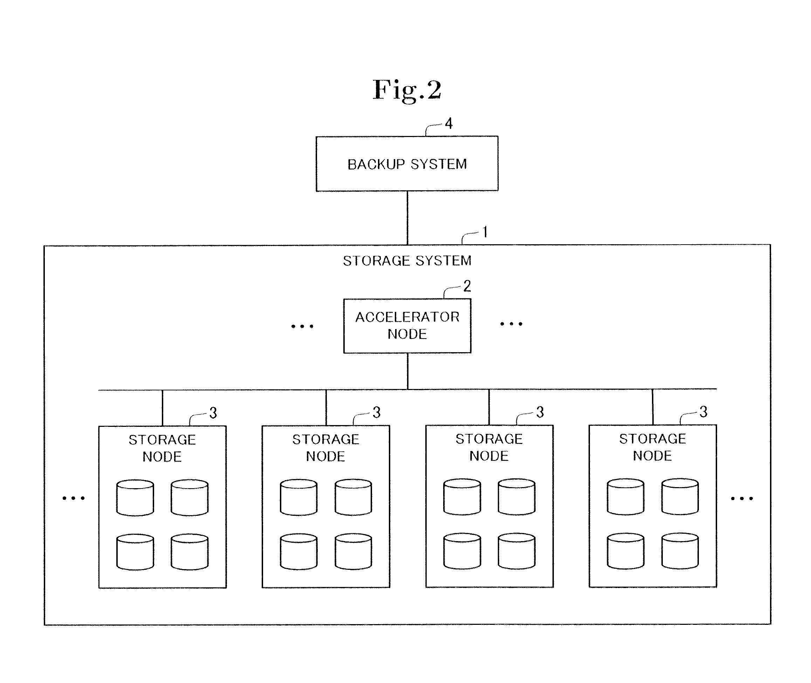

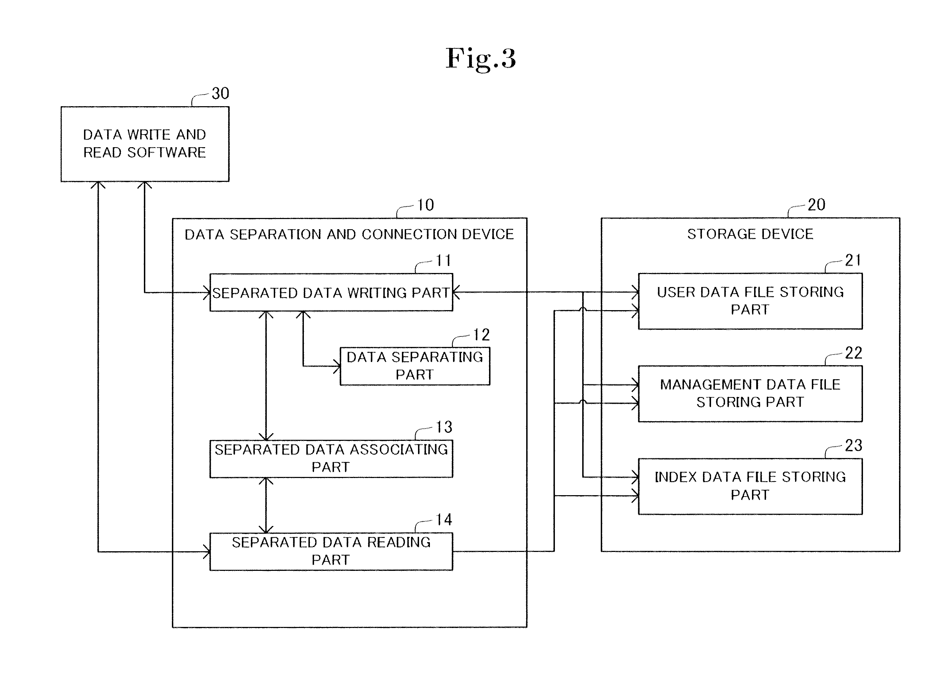

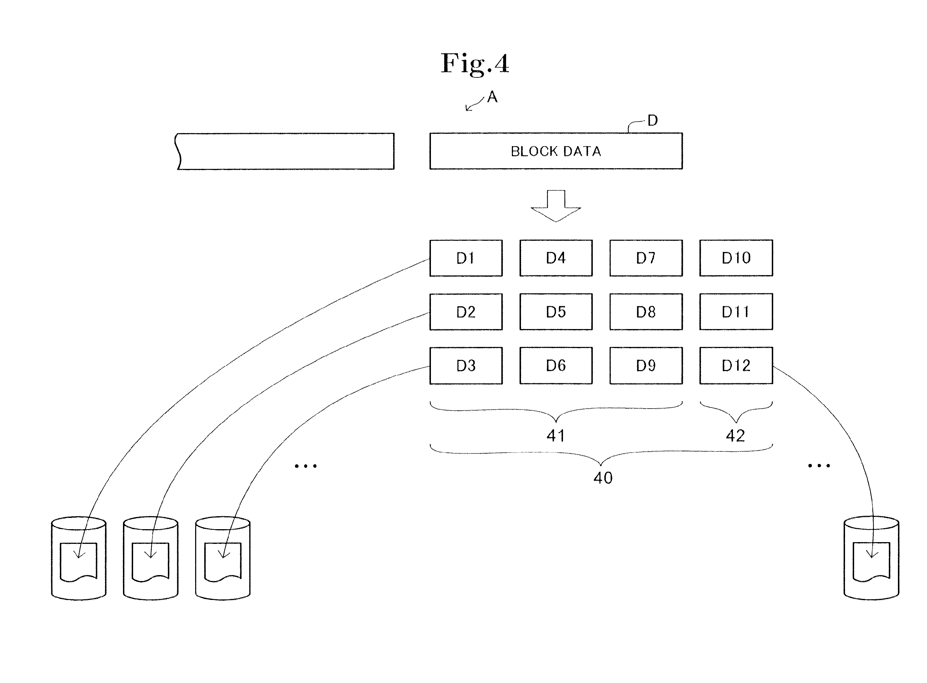

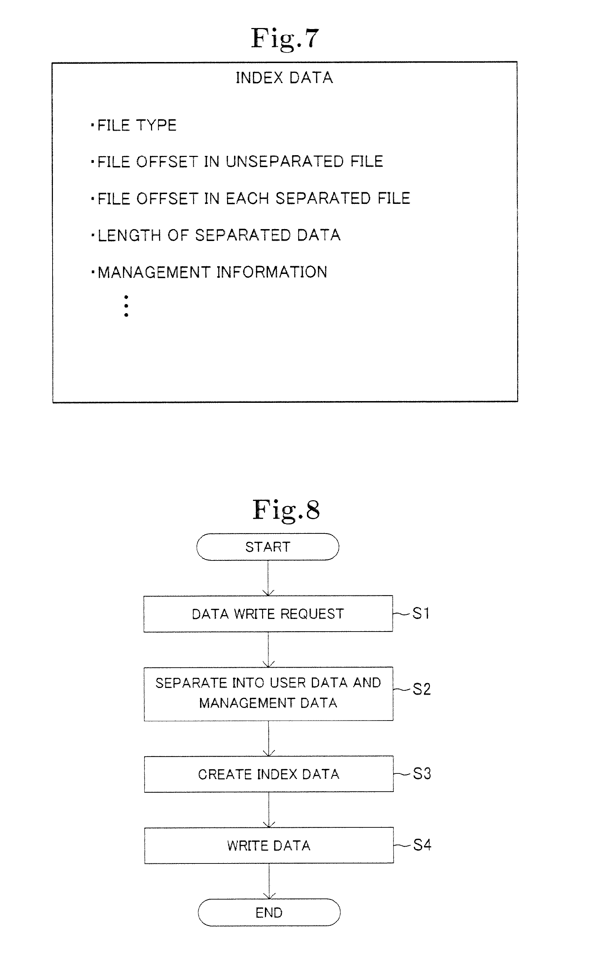

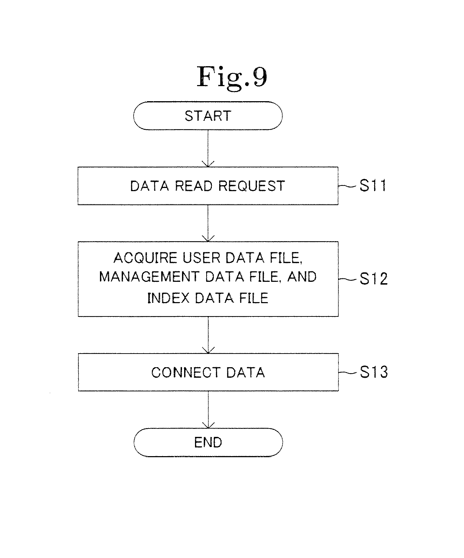

A first exemplary embodiment of the present invention will be described with reference to Figs. 1 to 9. Fig. 1 is a block diagram showing a configuration of a whole system. Fig. 2 is a block diagram showing an outline of the storage system, and Fig. 3 is a function block diagram showing a configuration of the storage system. Figs. 4 to 6 are explanation views for explaining a data write process in the storage system. Fig. 7 is a view showing a data structure of index data stored in a storage device. Figs. 8 and 9 are flowcharts showing operations of the storage system.

This exemplary embodiment shows a specific example of a storage device and the like disclosed in Supplementary Notes described later. Below, a description will be made assuming the storage system is configured by connecting a plurality of server computers. However, the storage system in the present invention is not limited to be configured by a plurality of computers, and may be configured by one computer.

### [Configuration]

As shown in Fig. 1, a storage system 1 according to the present invention is connected to a backup system 4 that controls a backup process via a network N. The backup system 4 acquires backup target data (data to be written) stored in a backup target device 5 connected via the network N, and requests the storage system 1 to store the data. Consequently, the storage system 1 stores the backup target data requested to be stored, as a backup.

As shown in Fig. 2, the storage system 1 in this exemplary embodiment employs a configuration in which a plurality of server computers are connected. To be specific, the storage system 1 includes an accelerator node 2 that is a server computer controlling a storage reproduction operation in the storage system 1, and a storage node 3 that is a server computer equipped with a storage device for storing data. The number of the accelerator node 2 and the number of the storage node 3 are not limited to those shown in Fig. 2, and the system may be configured by connecting more nodes 2 and more nodes 3.

Furthermore, the storage system 1 in this exemplary embodiment is a content-addressable storage system that divides data and makes the data redundant to distribute and store the data into a plurality of storage devices and, by a unique content address set depending on the content of the stored data, specifies a storage position in which the data is stored. This content-addressable storage system will be described in detail later.

Below, assuming the storage system 1 is one system, a configuration and a function of the storage system 1 will be described. That is to say, the configuration and the function of the storage system 1 described below may be included in either the accelerator node 2 or the storage node 3. The storage system 1 is not necessarily limited to being equipped with the accelerator node 2 and the storage node 3 as shown in Fig. 2, and may have any configuration. For example, the storage system 1 may be configured by one computer. Besides, the storage system 1 is not limited to a content-addressable storage system, and may be any storage system as far as it has a deduplication function.

Fig. 3 shows a configuration of the storage system 1 in this exemplary embodiment. As shown in this figure, the storage system 1 is configured by server computers, and includes a data separation and connection device 10 and a storage device 20 that are connected to each other. The data separation and connection device 10 is connected to data write and read software 30 installed in the backup target device 5 or the backup system 4 described above and, in response to a request from this software 30, executes a process of storing or retrieving a file.

The data separation and connection device 10 includes a separated data writing part 11, a data separating part 12, a separated data associating part 13, and a separated data reading part 14, which are structured by installation of a program into an arithmetic device mounted therein. Moreover, the storage device 20 is provided with a user data file storing part 21, a management data file storing part 22, and an index data file storing part 23.

Actually, the configuration of the storage system 1 described above is configured by an arithmetic device such as a CPU (Central Processing Unit) and a storage device such as a hard disk drive of each of the accelerator node 2 and the storage node 3 shown in Fig. 2.

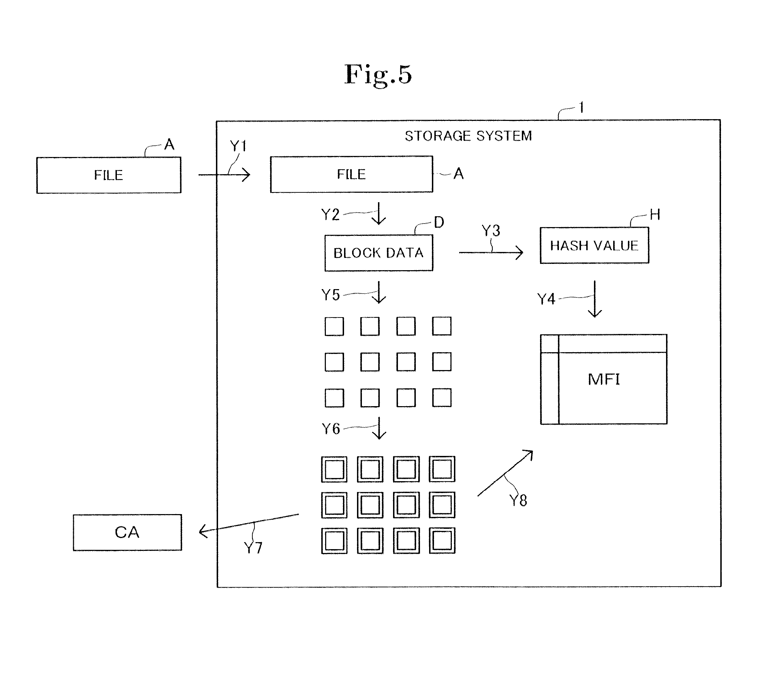

As described above, the storage system 1 in this exemplary embodiment is a content-addressable storage system. Therefore, the separated data writing part 11 (a data writing part) and the storage device 20 described above have a function of storing data into the storage device 20 by using a content address and, as described below, store data by dividing and distributing the data and specifying a storage position by a content address. A data write process using a content address in the storage system 1 will be described below with reference to Figs. 4 and 5.

At first, when accepting an input of a file A requested to be written from the data write and read software 30 as shown in Fig. 4 and by an arrow Y1 in Fig. 5, the storage system 1 divides the file A into block data D of a predetermined capacity (e.g., 64 KB) as shown in Fig. 4 and by an arrow Y2 in Fig. 5. The file A is, for example, a user data file, a management data file or an index data file separated by the data separating part 12 as described later. The block data D may be each user data, each management data or each index data separated by the data separating part 12.

Then, based on the data content of this block data D, the storage system 1 calculates a unique hash value H representing the data content (an arrow Y3 of Fig. 5). For example, a hash value H is calculated from the data content of block data D by using a previously set hash function.

Subsequently, by using the hash value H of the block data D of the file A, the storage system 1 checks whether the block data D has already been stored. To be specific, firstly, in a case that the block data D has already been stored, the hash value H thereof and a content address CA representing a storage position thereof have been associated and registered in an MFI (Main Fragment Index) file. Therefore, in a case that the hash value H of the block data D calculated before being stored exists in the MFI file, the storage system 1 can judge that block data D of the same content has already been stored (an arrow Y4 of Fig. 5). In this case, the storage system 1 acquires a content address CA associated with the hash value H registered in the MFI, which coincides with the hash value H of the block data D before being stored, from the MFI file. Then, the storage system 1 returns this content address CA as the content address CA of the block data D requested to be written. Consequently, the already stored data referred to with this content address CA is used as the block data D requested to be written, and the need for storing the block data D requested to be written is eliminated.

Further, in the case of judging that the block data D requested to be written has not been stored yet, the storage system 1 compresses the block data D and, as shown by an arrow Y5 in Fig. 5, divides the data into a plurality of fragment data of a predetermined capacity. For example, the storage system 1 divides the data into nine pieces of fragment data (division data 41) as shown by reference numerals D1 to D9 in Fig. 4. Moreover, the storage system 1 generates redundant data so that it is possible to restore the original block data even when some of the division fragment data are lost, and adds the redundant data to the division fragment data 41. For example, the storage system 1 adds three pieces of fragment data (redundant data 42) as shown by reference numerals D10 to D12 in Fig. 4. Thus, the storage system 1 generates a data set 40 that includes twelve pieces of fragment data configured by the nine pieces of division data 41 and the three pieces of redundant data.

Subsequently, the storage system 1 distributes and stores the fragment data configuring the data set generated as described above into storage regions formed on the storage devices, respectively. For example, in the case of generating the twelve pieces of fragment data D1 to D12 as shown in Fig. 4, the storage system 1 stores the fragment data D1 to D12 one by one into data storage files formed in the plurality of storage devices, respectively (refer to an arrow Y6 in Fig. 5).

Subsequently, the storage system 1 generates and manages a content address CA representing a storage position of the fragment data D1 to D12 stored as described above, that is, a storage position of the block data D to be restored from the fragment data D1 to D12. To be specific, the storage system 1 generates the content address CA by combining part (a short hash: e.g., initial 8 B (bytes) of the hash value H) of the hash value H calculated based on the content of the stored block data D with information representing a logical storage position. The storage system 1 then returns this content address CA to a file system in the storage system 1 (an arrow Y7 in Fig. 5). The storage system 1 manages identification information such as a file name of backup target data and the content address CA in association with each other in the file system.

Further, each of the storage nodes 3 manages a content address CA of block data D and a hash value H of the block data D in association with each other in the MFI file. Thus, the content address CA is stored in association with information specifying a file, the hash value H, and so on into the storage device of the accelerator node 2 or the storage nodes 3.

Further, the storage system 1 executes control to retrieve a file stored as described above. For example, when a retrieval request with a specific file designated is made to the storage system 1, the storage system 1 firstly designates a content address CA composed of a short hash that is part of a hash value corresponding to the file requested to be retrieved and logical position information, based on the file system. Then, the storage system 1 checks whether the content address CA is registered in the MFI file. When the content address CA is not registered, the requested data is not stored, so that the storage system 1 returns error.

On the other hand, when the content address CA relating to the retrieval request is registered, the storage system 1 specifies a storage position designated by the content address CA, and retrieves each fragment data stored in this specified storage position, as data requested to be retrieved. At this moment, in a case that data storage files storing the respective fragments and the storage position of the fragment data of one of the data storage files are known, it is possible to specify the storage position of the other fragment data based on the same storage position.

Then, the storage system 1 restores block data D from the respective fragment data retrieved in response to the retrieval request. Moreover, the storage system 1 connects a plurality of restored block data D, restores into a group of data like a file A, and returns it.

Thus, the storage system 1 in this exemplary embodiment eliminates duplication of data, and has a configuration for further increasing the efficiency in data storage. The configuration will be described in detail.

At first, the data separating part 12 included by the data separation and connection device 10 separates data into a "user data portion," which is equivalent to a real data portion of a file and whose value is not changed by the time of generation, the number of updates or the like, and a "management data portion," whose value is changed by a difference of the time, the number of updates or the like such as a timestamp or a serial number and which includes management information of the file. That is to say, a user data portion is data that is likely to have the same content as other user data and that can be expected to produce a deduplication effect. On the other hand, a management data portion is less likely to have the same content as other management data and that can be less expected to produce a deduplication effect. Criterion information for distinguishing the respective data portions is previously set in the data separating part 12, and separation into a user data portion and a management data portion is performed based on the criterion information.

However, the data separating part 12 is not limited to separating data to be written into a "user data portion" and a "management data portion" necessarily. The data separating part 12 may separate data into one kind of or multiple kinds of other data portions classified in accordance with a previously set criterion.

Then, the separated data writing part 11 (a data writing part) stores data separated by the data separating part 12 into the storage device 20. At this moment, the separated data are stored into different files depending on the types of the separated data, and the separated data associating part 13 generates index data including information respectively specifying storage positions of the user data portions and the management data portions based on the result of the separation.

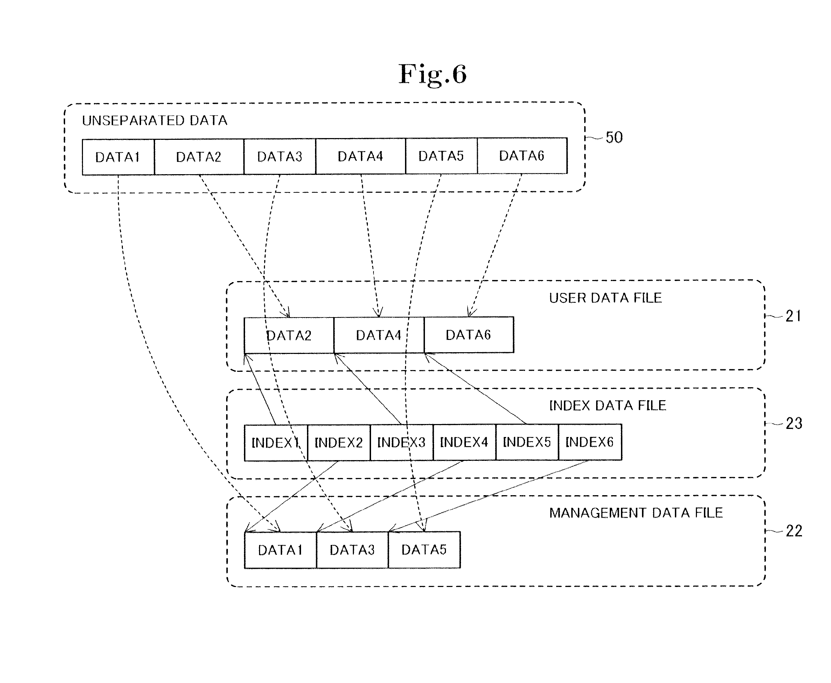

The separated data writing part 11 then stores the user data portion and management data portion having been separated and the index data into different files, respectively, and stores into the storage device 20. To be specific, firstly, as shown in Fig. 6, the user data portion is stored into a user data file within the user data file storing part 21 formed in the storage device 20. Further, as shown in Fig. 6, the management data portion is stored into a management data file within the management data file storing part 22 formed in the storage device 20. Furthermore, as shown in Fig. 6, the index data is stored into an index data file within the index data file storing part 23 formed in the storage device 20.

Consequently, in the user data file storing part 21, the user data file storing only the user data is stored. Further, in the management data file storing part 22, the management data file storing only the management data is stored. Furthermore, in the index data file storing part 23, the index data file storing only index information of the user data and the management data is stored.

As shown in Fig. 7, the index data contains various kinds of management information such as a file type, a file offset in an unseparated file, a file offset in each separated file and a length of separated data. To be specific, a "file type" is file information that specifies the type of a file or a file itself in which corresponding user data or management data is stored. A "file offset in an unseparated file" is information on a location within the file before being separated of the separated user data or management data. A "file offset in each separated file" is information on a location within a user data file or management data file in which the separated user data or management data is stored after separation. A "length of separated data" is the data length of the separated user data or management data. However, information stored in the index data is not limited to the information described above.

As explained with reference to Figs. 4 and 5, each file described above is further divided and made to be redundant, and distributed and stored into a plurality of storage device.

Further, the separated data reading part 14 (a data reading part) included in the data separation and connection device 10 acquires a user data file, a management data file and an index data file from the storage device 20 based on the name of a file requested to be read by the data write and read software 30. Then, the separated data associating part 13 analyzes respective files in which user data and management data are stored and storing locations within the files, based on information stored in the acquired index data file. Subsequently, based on the result of the analysis, the user data and the management data are read from the user data file and the management data file, respectively. Then, in accordance with the information stored in the index data file, the locations of the user data and the management data in data before being separated are specified, and the user data and the management data are connected, whereby the data before being separated is generated.

After that, the separated data reading part 14 returns the generated data before being separated to the data write and read software 30. Thus, the data write and read software 30 can refer to a file without being aware that data has been separated and stored.

### [Operation]

Next, an operation of the storage system 1, namely, the data separation and connection device 10 described above will be illustrated with reference to Fig. 6 and flowcharts shown in Figs. 8 and 9.

At first, an operation when writing data will be illustrated with reference to Figs. 6 and 8. When the data write and read software 30 issues a data write request to the data separation and connection device 10 (step S1), the separated data writing part 11 transmits the received data to the data separating part 12. Then, the data separating part 12 separates the received data into a user data portion and a management data portion as described above, and returns information on the separation to the separated data writing part 11 (step S2).

Subsequently, the separated data writing part 11 transmits the received information on the data separation to the separated data associating part 13. Then, the separated data associating part 13 creates index data based on the received information on the data separation (step S3), and returns the index data to the separated data writing part 11. As shown in Fig. 7, index data contains the type of a file in which each separated data is stored, a file offset in the file before the data separation, a file offset in a user data file or management data file after the data separation, the length of the separated data, and other management information.

Finally, based on the information on the data separation and the index data, the separated data writing part 11 writes the user data, the management data and the index data as different files, respectively, into the storage device 20 (step S4). That is to say, as shown in Fig. 6, the separated data writing part 11 writes the user data into the user data file, the management data into the management data file, and the index data into the index data file, respectively. In the example of Fig. 6, an index I contains location information or the like of data 2 that is user data, and an index 2 contains location information or the like of data 1 that is management data.

Next, an operation when reading data will be illustrated with reference to Figs. 6 and 9. When the data write and read software 30 issues a data read request to the data separation and connection device 10 (step S11), the separated data reading part 14 acquires a user data file, a management data file and an index data file stored in the storage device 20 based on the name of a file requested to be read (step S12), and transmits the respective information to the separated data associating part 13.

Then, based on the received information, the separated data associating part 13 reads index data corresponding to the requested data from the index data file. Further, based on the read index data, the separated data associating part 13 reads user data corresponding to the requested data from the user data file, and reads management data corresponding to the requested data from the management data file. At this moment, the separated data associating part 13 reads user data and management data configuring the requested data, based on information such as a file type, a file offset in a file before data separation, a file offset in a user data file or a management data file after data separation, and the length of separated data, which index data contains. For example, in the example of Fig. 6, the separated data associating part 13 reads the data 2 that is user data based on the index 1, and reads the data 1 that is management data based on the index 2.

Furthermore, the separated data associating part 13 connects the user data and the management data that have been read based on the index data (step S13) to generate original data before separation, and returns the connected data to the separated data reading part 14.

The separated data reading part 14 then returns the returned data as data of a file before data separation, to the data write and read software 30.

Thus, according to the present invention, management information inserted into a backup file by backup software may cause decrease of the efficiency of deduplication of data when, for example, data is backed up. However, it is possible to increase the efficiency of deduplication of data by separating data in a backup file into user data and management data and storing into a storage device. That is to say, deduplication of data is hardly executed on management data and index data whose data amount is small, but deduplication of data is efficiently executed on a large amount of user data written in a user data file, whereby it is possible to realize high efficiency of deduplication of data.

Further, although data is separated and stored into a plurality of files in a storage system for the purpose of increasing the efficiency of deduplication as described above, it is possible to treat as one file from outside because the separated data are connected and offered as one data at the time of reading of data.

### [Supplementary Notes]

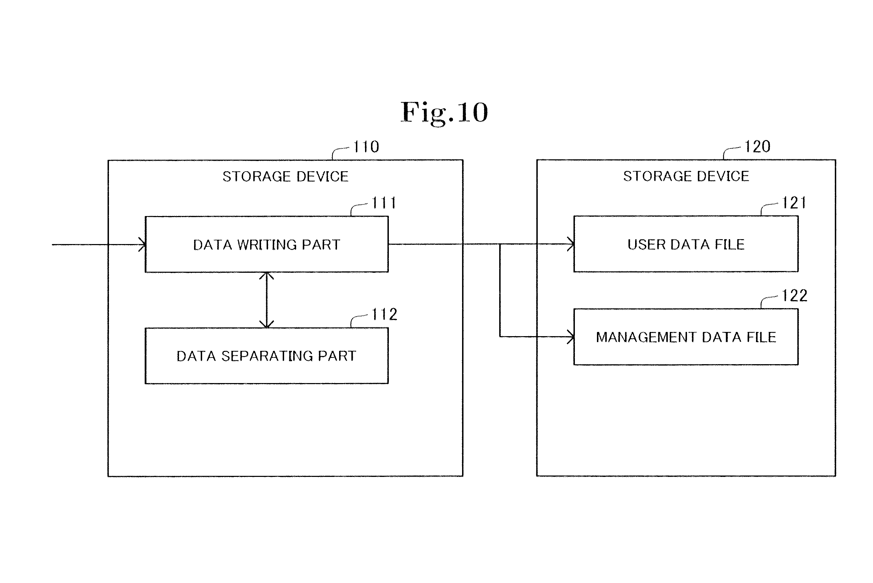

The whole or part of the exemplary embodiments disclosed above can be described as the following supplementary notes. Below, the outline of a configuration of a storage device 110 according to the present invention will be described with reference to Fig. 10. Moreover, the configurations of a program and a data storing method according to the present invention will be described. However, the present invention is not limited to the following configurations.

### (Supplementary Note 1)

A storage device 110, comprising:
a data writing part 111 configured to store data to be written into a storage device 120 and also, when storing other data of a same content as the data already stored in the storage device 120 into the storage device 120, refer to the data already stored in the storage device 120 as the other data; and
a data separating part 112 configured to separate data to be written into a user data portion and a management data portion that are classified in accordance with a previously set criterion,
wherein the data writing part 111 is configured to store the user data portion into a user data file 121, store the management data portion into a management data file 122, and store the user data portion and the management data portion separated by the data separating part 112 into the storage device 120.

### (Supplementary Note 2)

The storage device according to Supplementary Note 1, wherein the data writing part is configured to store index data into an index data file and store into the storage device, the index data including information on locations within unseparated data of the user data portion and the management data portion separated by the data separating part and information on a location in each of the user data file and the management data file after separation into the user data portion and the management data portion.

### (Supplementary Note 3)

The storage device according to Supplementary Note 2, wherein the index data stored by the data writing part into the index data file includes file information specifying the user data file and the management data file respectively storing the user data portion and the management data portion separated by the data separating part.

### (Supplementary Note 4)

The storage device according to Supplementary Note 2 or 3, wherein the index data stored by the data writing part into the index data file includes data length information representing a data length of each of the user data portion and the management data portion separated by the data separating part.

### (Supplementary Note 5)

The storage device according to any of Supplementary Notes 2 to 4, comprising a data reading part configured to read the index data stored in the index data file, read the user data portion and the management data portion stored in the storage device based on information included in the index data, and restore data before separation by the data separating part.

### (Supplementary Note 6)

The storage device according to any of Supplementary Notes 1 to 5, wherein the management data portion is management information for managing data to be written.

### (Supplementary Note 7)

A program comprising instructions for causing an information processing device to realize:
a data writing part configured to store data to be written into a storage device and also, when storing other data of a same content as the data already stored in the storage device into the storage device, refer to the data already stored in the storage device as the other data; and
a data separating part configured to separate data to be written into a user data portion and a management data portion that are classified in accordance with a previously set criterion,
wherein the data writing part is configured to store the user data portion into a user data file, store the management data portion into a management data file, and store the user data portion and the management data portion separated by the data separating part into the storage device.

### (Supplementary Note 8)

The program according to Supplementary Note 7, wherein the data writing part is configured to store index data into an index data file and store into the storage device, the index data including information on locations within unseparated data of the user data portion and the management data portion separated by the data separating part and information on a location in each of the user data file and the management data file after separation into the user data portion and the management data portion.

### (Supplementary Note 9)

A data storing method in an information processing device that has a function of storing data to be written into a storage device and also, when storing other data of a same content as the data already stored in the storage device into the storage device, referring to the data already stored in the storage device as the other data, the data storing method comprising:
separating data to be written into a user data portion and a management data portion that are classified in accordance with a previously set criterion; and
storing the user data portion into a user data file, storing the management data portion into a management data file, and storing the user data portion and the management data portion separated by the data separating part into the storage device.

### (Supplementary Note 10)

The data storing method according to Supplementary Note 9, comprising storing index data into an index data file and storing into the storage device, the index data including information on locations within unseparated data of the user data portion and the management data portion separated by the data separating part and information on a location in each of the user data file and the management data file after separation into the user data portion and the management data portion.

Although the present invention has been described with reference to the respective exemplary embodiments, the present invention is not limited to the exemplary embodiments described above. The configurations and details of the present invention can be altered in various manners that can be understood by those skilled in the art within the scope of the present invention.

The present invention is based upon and claims the benefit of priority from Japanese patent application No. 2010-47411, filed on March 4, 2010, the disclosure of which is incorporated herein in its entirety by reference.

### DESCRIPTION OF REFERENCE NUMERALS

- 1: storage system
- 2: accelerator node
- 3: storage node
- 4: backup system
- 5: backup target device
- 10: data separation and connection device
- 11: separated data writing part
- 12: data separating part
- 13: separated data associating part
- 14: separated data reading part
- 20: storage device
- 21: user data file storing part
- 22: management data file storing part
- 23: index data file storing part
- 30: software
- 110: storage device
- 11: data writing part
- 112: data separating part
- 120: storage device
- 121: user data file
- 122: management data file

## Claims

1. A storage device, comprising:
a data writing part configured to store data to be written into a storage device and also, when storing other data of a same content as the data already stored in the storage device into the storage device, refer to the data already stored in the storage device as the other data; and
a data separating part configured to separate data to be written into a user data portion and a management data portion that are classified in accordance with a previously set criterion,
wherein the data writing part is configured to store the user data portion into a user data file, store the management data portion into a management data file, and store the user data portion and the management data portion separated by the data separating part into the storage device.

2. The storage device according to Claim 1, wherein the data writing part is configured to store index data into an index data file and store into the storage device, the index data including information on locations within unseparated data of the user data portion and the management data portion separated by the data separating part and information on a location in each of the user data file and the management data file after separation into the user data portion and the management data portion.

3. The storage device according to Claim 2, wherein the index data stored by the data writing part into the index data file includes file information specifying the user data file and the management data file respectively storing the user data portion and the management data portion separated by the data separating part.

4. The storage device according to Claim 2 or 3, wherein the index data stored by the data writing part into the index data file includes data length information representing a data length of each of the user data portion and the management data portion separated by the data separating part.

5. The storage device according to any of Claims 2 to 4, comprising a data reading part configured to read the index data stored in the index data file, read the user data portion and the management data portion stored in the storage device based on information included in the index data, and restore data before separation by the data separating part.

6. The storage device according to any of Claims 1 to 5, wherein the management data portion is management information for managing data to be written.

7. A program comprising instructions for causing an information processing device to realize:
a data writing part configured to store data to be written into a storage device and also, when storing other data of a same content as the data already stored in the storage device into the storage device, refer to the data already stored in the storage device as the other data; and
a data separating part configured to separate data to be written into a user data portion and a management data portion that are classified in accordance with a previously set criterion,
wherein the data writing part is configured to store the user data portion into a user data file, store the management data portion into a management data file, and store the user data portion and the management data portion separated by the data separating part into the storage device.

8. The program according to Claim 7, wherein the data writing part is configured to store index data into an index data file and store into the storage device, the index data including information on locations within unseparated data of the user data portion and the management data portion separated by the data separating part and information on a location in each of the user data file and the management data file after separation into the user data portion and the management data portion.

9. A data storing method in an information processing device that has a function of storing data to be written into a storage device and also, when storing other data of a same content as the data already stored in the storage device into the storage device, referring to the data already stored in the storage device as the other data, the data storing method comprising:
separating data to be written into a user data portion and a management data portion that are classified in accordance with a previously set criterion; and
storing the user data portion into a user data file, storing the management data portion into a management data file, and storing the user data portion and the management data portion separated by the data separating part into the storage device.

10. The data storing method according to Claim 9, comprising storing index data into an index data file and storing into the storage device, the index data including information on locations within unseparated data of the user data portion and the management data portion separated by the data separating part and information on a location in each of the user data file and the management data file after separation into the user data portion and the management data portion.
